(19) Europäisches Patentamt
European Patent Office
Office européen des brevets

(11) **EP 1 369 664 B1**

(12) **EUROPÄISCHE PATENTSCHRIFT**

(45) Veröffentlichungstag und Bekanntmachung des Hinweises auf die Patenterteilung:
**27.02.2013 Patentblatt 2013/09**

(51) Int Cl.:
**G01B 17/02** *(2006.01)* **B21B 38/04** *(2006.01)*

(21) Anmeldenummer: **03010645.4**

(22) Anmeldetag: **13.05.2003**

(54) **Verfahren und Vorrichtung zur Bestimmung der Exzentrizität eines Hohlblocks**

Method and device for measuring the excentricity of a hollow block

Procédé et dispositif pour déterminer l'excentricité d'un bloc creux

(84) Benannte Vertragsstaaten:
**AT BE BG CH CY CZ DE DK EE ES FI FR GB GR HU IE IT LI LU MC NL PT RO SE SI SK TR**

(30) Priorität: **04.06.2002 DE 10224635**

(43) Veröffentlichungstag der Anmeldung:
**10.12.2003 Patentblatt 2003/50**

(73) Patentinhaber: **SMS Meer GmbH**
**41069 Mönchengladbach (DE)**

(72) Erfinder:
• **Sauerland, Martin**
**41068 Mönchengladbach (DE)**
• **Häusler, Karl Heinz**
**41352 Korschenbroich (DE)**

(74) Vertreter: **Grosse, Wolf-Dietrich Rüdiger et al**
**Valentin, Gihske, Grosse**
**Patentanwälte**
**Hammerstrasse 3**
**57072 Siegen (DE)**

(56) Entgegenhaltungen:
**EP-A- 0 955 149     EP-A- 1 102 033**
**FR-A- 2 530 804     US-A- 5 270 942**

**EP 1 369 664 B1**

**Beschreibung**

Die Erfindung betrifft ein Verfahren zur Bestimmung der Exzentrizität eines Hohlblocks vor, bei oder nach dessen Passieren eines Walzwerkes, wobei sich der Hohlblock in Richtung seiner Längsachse translatorisch bewegt, mittels mindestens einer Messvorrichtung, die die Wanddicke des Hohlblocks an einer Längen- und Umfangsposition des Hohlblocks ermitteln kann, wobei die Messvorrichtung während der Messung in Richtung der Längsachse und/oder in Umfangsrichtung des Hohlblocks bewegt wird und wobei während der Bewegung eine Anzahl Wanddickenmessungen vorgenommen werden,

In vielen Bereichen der Technik werden Rohre aus Stahl benötigt, die beispielsweise durch ein Verfahren hergestellt werden können, bei dem zylindrisch geformtes Ausgangsmaterial in einem Schrägwalzwerk unter Einsatz eines axial feststehenden Lochdorns zu einem rohrförmigen Hohlblock umgeformt wird. Zur Umformung des zylindrisch geformten Ausgangsmaterials zu einem nahtlosen Rohr wird das Ausgangsmaterial über den Lochdorn gewalzt. Ein solches Verfahren ist beispielsweise aus der EP 0 940 193 A2 bekannt.

Beim Streckreduzierwalzen und beim Reduzier- und Maßwalzen nahtloser Stahlrohre passiert das zu bearbeitende Rohr eine Walzstraße, in der in Förderrichtung des Rohres hintereinander eine Anzahl Walzgerüste angeordnet sind. In jedem Walzgerüst sind Walzen gelagert, die beim Walzvorgang das Rohr jeweils um einen definierten Umfangsabschnitt kontaktieren. Insgesamt wirken dabei in jedem Walzgerüst mehrere, beispielsweise drei Walzen so zusammen, dass das Rohr im wesentlichen über seinen gesamten Umfang von den Walzen kontaktiert wird. Das Rohr wird damit auf einen reduzierten Durchmesser gewalzt und dabei auf eine genaue Form gebracht.

Das Rohr soll nach dem Walzen eine ideale Form haben, d. h. die zylindrische Kontur des Außenumfangs und die des Innenumfangs sollen zwei konzentrische Kreise bilden. Tatsächlich gibt es indes stets Toleranzen im Fertigrohr, so dass eine gewisse Exzentrizität der Kreiskontur des Innenumfangs relativ zu derjenigen des Außenumfangs vorliegt.

Der entscheidende Qualitätsparameter bei der Rohrherstellung ist die Rohrwanddicke, die im Produktionsprozess gemessen und überwacht wird. Zur Ermittlung der Wanddicke des Rohres sind Ultraschall-Messverfahren bekannt. Ultraschall-Dicken-Messverfahren nach der Impuls-Echo-Methode ermitteln über die Laufzeitmessung eines Ultraschallimpulses die Wanddicke.

Eine weitere sehr wichtige Kenngröße bzw. ein weiteres wichtiges Qualitätskriterium von Hohlblöcken und deren Vorprodukten ist die Exzentrizität des Hohlblocks. Zur Gewinnung dieser Kenngröße in einem möglichst frühzeitigen Produktionsstadium werden die erwähnten Wanddickenmessgeräte eingesetzt, wobei beispielsweise im Auslauf eines Schrägwalzwerkes ein solches Wanddickenmessgerät positioniert wird. Damit ist es mit relativ geringem Aufwand möglich, im Prozess die Wanddicke zu ermitteln. Nachdem der Hohlblock im Auslauf des Schrägwalzwerks rotiert, kann mit einem solchen Wanddickenmessgerät eine Anzahl Wanddicken-Messpunkte über dem Umfang des Hohlblocks ermittelt werden, die der Bestimmung der Exzentrizität zugrunde gelegt werden können.

Bei der in Rede stehenden Exzentrizität handelt es sich nicht nur um einen exzentrischen Versatz des Außendurchmessers des Hohlblocks relativ zum Innendurchmesser des Hohlblocks, wobei dieser Versatz entlang der Längenkoordinate des Hohlblocks konstant bzw. ortsfest bliebe, sondern die Exzentrizität "wandert" in Richtung der Längenkoordinate des Hohlblocks in einer solchen Weise, dass sich ein wendelartiger Verlauf der inneren Oberfläche des Hohlblocks relativ zur äußeren Oberfläche des Hohlblocks ergibt. Dieser Exzentrizitätsverlauf ist durch den Walzprozess im Schrägwalzwerk bedingt, so dass sich der Umlaufcharakter ähnlich wie der Verlauf eines Korkenziehers ergibt. Der Verlauf dieser Exzentrizität wird durch die sog. Haupt-Innenwendel bestimmt, deren Ganghöhe bzw. Schlaglänge sich aus dem Prozess im Schrägwalzwerk und dort aus dem Vorschubwinkel des Schrägwalzwerks ergibt. Der Exzentrizitätsverlauf wiederholt sich periodisch mit der Schlaglänge. Weitere Exzentrizitäten umlaufenden Charakters mit großer Ganghöhe bzw. niedriger Frequenz entstehen überlagert z. B. durch ungleichförmige Durchwärmung des Blockes im Drehherdofen

Aus der EP 1 102 033 A ist es bereits bekannt, ein Verfahren zur berührungslosen Online-Heißwanddickenmessung zur Erfassung unerwünschter Innenwandstrukturen eines Rohrs einzusetzen, beispielsweise von störenden Innenpolygonen. Dafür ist vorgesehen, dass mittels des Laser-Ultraschallverfahrens und unter Verwendung eines Messkopfes ein Segment der Rohrwand des zu messenden Rohres während des Walzprozesses in Umfangsrichtung gescannt wird. Vorgesehen ist dabei weiterhin, dass gegebenenfalls durch mathematische Analysen und Symmetriebetrachtungen der Wandverlauf des Rohrquerschnittes in einem Rechner rekonstruiert werden kann, ohne, dass hierzu Details angegeben sind.

Die Messung des Exzentrizitätsverlaufs über der Längenkoordinate des Hohlblocks, also die Erfassung der inneren Oberfläche des Hohlblocks relativ zur äu-βeren Oberfläche des Hohlblocks über die Längenkoordinate des Hohlblocks, ist aus folgendem Grunde problematisch:

Die Haupt-Exzentrizität, d. h. die Haupt-Innenwendel, deren Ganghöhe durch den Vorschubwinkel des Schrägwalzwerks gegeben ist, ist identisch mit der "Mess-Spirale". Unter dieser ist der Verlauf der Kontaktstelle zwischen Hohlblock und Wanddickenmessgerät zu verstehen. Nachdem der Hohlblock im Auslauf des Schrägwalzwerks rotiert und das Wanddickenmessgerät ortsfest angeordnet ist, verläuft die Kontaktstelle zwischen Wanddickenmessgerät und Oberfläche des Hohlblocks im Raum als Spirale.

Durch die Identität der Schlaglänge der Haupt-Innenwendel mit der Ganghöhe der "Mess-Spirale" ergibt sich, dass es nicht möglich ist, mittels des Wanddickenmessgeräts den räumlichen Verlauf der Exzentrizität über der Längenkoordinate des Hohlblocks zu erfassen. Vielmehr misst das Wanddickenmessgerät eine mehr oder weniger konstant bleibende Wanddicke, die sich entlang der Mess-Spirale ergibt. Hieraus kann jedoch nicht auf den räumlichen Verlauf der Haupt-Innenwendel geschlossen werden. Mit diesem Verfahren bzw. mit einer solchen Anordnung kann also die wesentliche Exzentrizität des Hohlblocks nicht erfasst werden. Es ist hiermit insbesondere nicht möglich, die räumliche Erstreckung der Exzentrizität über der Längskoordinate des Hohlblocks zu erfassen, was jedoch für eine hinreichende Qualitätsbeurteilung wünschenswert bzw. erforderlich ist.

Die Erfindung liegt daher die Aufgabe zugrunde, ein Verfahren und eine zugehörige Vorrichtung vorzuschlagen, mit dem bzw. mit der es möglich ist, die Exzentrizität des Hohlblocks auch in ihrer räumlichen Erstreckung entlang der Längenkoordinate des Hohlblocks zu erfassen und insbesondere ein für die Praxis sinnvoll verwertbares Maß für die Exzentrizität anzugeben.

Die Lösung dieser Aufgabe durch die Erfindung ist verfahrensgemäß dadurch gekennzeichnet, dass der Verlauf der Exzentrizität des Hohlblocks annähernd abgebildet wird als Verlauf der Wanddicke als Funktion der sich in Richtung der Längsachse des Hohlblocks erstreckenden Längenkoordinate und des Drehwinkels um die Längenkoordinate gemäß der Beziehung

$$s(\phi, z) = s_0(z) + s_1(z) \cos(\phi + \delta(z)),$$

wobei

$S_0$ die mittlere Wanddicke des Hohlblockes,
$S_1$ die der mittleren Wanddicke $s_0$ überlagerte Wanddickenamplitude, und
$\delta$ der von der Längenkoordinate abhängige Lagewinkel der umlaufenden Exzentrizität

ist.

Dabei leitet die Messvorrichtung die beim Passieren des Hohlblocks gemessenen Wanddicken einem Rechnermittel zu, das diese einer Fourier-Analyse unterzieht, um für den funktionalen Verlauf der Wanddicke als Funktion der Längenkoordinate und des Drehwinkels eine Näherung der Form

$$s(\phi,z) \cong s_0{}^* + \sum s_{i,1} \cos(\phi + 2\pi/p_i \, z + \xi_{i,1})$$

zu ermitteln, wobei

$s_0{}^*$ und $s_{i,1}$ die ermittelten Fourier-Koeffizienten für die Wanddicke des Hohlblocks bei Summation (i) über die Anzahl (n) der Fourier-Reihenelemente und
$p_i$ und $\xi_{i,1}$ die Fourier-Koeffizienten für die Ganghöhen bzw. für die Anfangslagewinkel bei Summation (i) über die Anzahl (n) der Fourier-Reihenelemente

sind, wobei die Frequenztransformation durch die Messkopfbewegung berücksichtigt wird.

Die Messvorrichtung wird während der Messung in Richtung der Längsachse und/oder in Umfangsrichtung des Hohlblocks bewegt, wobei während der Bewegung eine Anzahl Wanddickenmessungen vorgenommen werden. Die praxisgerechte Aufbereitung der gemessenen Daten der Wanddicke hat eine besondere Bedeutung.

Die Messvorrichtung verbleibt bei der Messung nicht ortsfest, sondern sie wird relativ zum Walzwerk bewegt.

Die Exzentrizität des Hohlblocks wird auf diese Weise bevorzugt im Bereich des Auslaufs eines Walzwerkes, insbesondere eines Schrägwalzwerkes, bestimmt. Gerade im Falle eines Schrägwalzwerks ist vorgesehen, dass der Hohlblock vor, bei oder nach seinem Passieren des Walzwerkes, insbesondere bei seinem Auslauf aus dem Walzwerk, um seine Längsachse rotiert.

Mit Vorteil wird die Bewegung der Messvorrichtung sich zyklisch wiederholend ausgeführt.

Bevorzugt wird die Messvorrichtung während der Messung in Richtung der Längsachse mit der Geschwindigkeit des Hohlblocks, insbesondere mit der Austrittsgeschwindigkeit des Hohlblocks aus dem Walzwerk, bewegt.

Zur Erfassung einer hinreichenden Datenmenge ist bevorzugt vorgesehen, dass bei ausschließlicher Bewegung der Messvorrichtung in Richtung der Längsachse die Messvorrichtung eine Hubbewegung ausführt, die mindestens der halben Ganghöhe, vorzugsweise mindestens einer ganzen Ganghöhe, der Exzentrizität im Hohlblock (also der Ganghöhe der Haupt-Innenwendel) entspricht. Entsprechend kann bei ausschließlicher Bewegung der Messvorrichtung in Umfangsrichtung des Hohlblocks vorgesehen werden, dass die Messvorrichtung eine Schwenkbewegung ausführt, die mindestens 180° beträgt.

Die Erfindung betrifft auch eine Vorrichtung zur Bestimmung der Exzentrizität eines Hohlblocks vor, bei oder nach dessen Passieren eines Walzwerkes, wobei sich der Hohlblock in Richtung seiner Längsachse translatorisch bewegt, und die Vorrichtung mindestens eine Messvorrichtung zur Ermittlung der Wanddicke des Hohlblocks an einer Längen- und Umfangsposition des Hohlblocks aufweist, wobei die Messvorrichtung mit einem Bewegungselement in Verbindung steht, das die Messvorrichtung während der Messung in Richtung der Längsachse und/oder in Umfangsrichtung des Hohlblocks beaufschlagt,

gekennzeichnet durch Rechnermittel zur Durchführung einer Fourier-Transformation zur näherungsweisen Ermittlung des Verlaufs der Exzentrizität des Hohlblocks, dazu eingerichtet um für den funktionalen Verlauf der Wanddicke (5) als Funktion der Längenkoordinate (z) und des Drehwinkels ($\phi$) eine Näherung der Form

$$s(\phi,z) \approx s_0{}^* + \sum s_{i,1}\ \cos(\phi + 2\pi/p_i\ z + \xi_{i,1})$$

zu ermitteln, wobei $s_0{}^*$ und $S_{i,1}$ die ermittelten Fourier-Koeffizienten für die Wanddicke des Hohlblocks bei Summation (i) über die Anzahl (n) der Fourier-Reihenelemente und $p_i$ und $\xi_{i,1}$ die Fourier-Koeffizienten für die Ganghöhen bzw. für die Anfangslagewinkel bei Summation (i) über die Anzahl (n) der Fourier-Reihenelemente sind.

Die Messvorrichtung ist bevorzugt im Bereich des Auslaufs eines Walzwerkes, insbesondere eines Schrägwalzwerkes, angeordnet.

Mit Vorteil weist das Bewegungselement eine in Richtung der Längsachse des Hohlblocks verlaufende Linearführung und einen auf dieser verfahrbaren Schlitten auf.

Das Bewegungselement kann auch eine in Umfangsrichtung des Hohlblocks verlaufende Führung und einen auf dieser verfahrbaren Schlitten aufweisen.

Es können auch mehr als eine Messvorrichtung zum Einsatz kommen.

Zur effizienten Ermittlung der Wanddicke des Hohlblocks hat es sich bewährt, dass die Messvorrichtung Mittel zum Einleiten eines Ultraschallsignals in die Oberfläche des Hohlblocks aufweist; das Mittel ist bevorzugt ein Laser, insbesondere ein blitzlampen-gepumpter Nd:YAG-Laser. Ferner können Mittel zum Messen eines Zeitintervalls zwischen zwei Echo-Ultraschallsignalen vorgesehen werden, die der Hohlblock infolge der Einleitung des Ultraschallsignals emittiert. Bei diesen Mitteln kann es sich um einen Laser, insbesondere um einen dioden-gepumpten Nd:YAG-Laser, und um einen optischer Analysator, insbesondere um ein Fabry-Perot-Interferometer, handeln.

Durch die vorgeschlagenen verfahrenstechnischen Maßnahmen bzw. die erläuterte Vorrichtung ist es möglich, sich in einfacher Weise ein Bild über den räumlichen Verlauf der Exzentrizität über der Längenkoordinate des Hohlblocks zu verschaffen und hieraus eine praxistaugliche Aussage über die Größe und Lage der Exzentrizität zu gewinnen. Die zum Einsatz kommenden Näherungen ermöglichen es insbesondere, in sehr einfacher Weise praktisch verwertbare Beurteilungskriterien für die Qualität des Hohlblocks abzuleiten.

In der Zeichnung sind Ausführungsbeispiele der Erfindung dargestellt. Es zeigen:

Fig. 1     schematisch in dreidimensionaler Ansicht einen Hohlblock mit Exzentrizität samt einer Messvorrichtung zu deren Erfassung;

Fig. 2     eine zu Fig. 1 alternative Ausgestaltung; und

Fig. 3     schematisch das Prinzip der Messung der Wanddicke eines Hohlblocks.

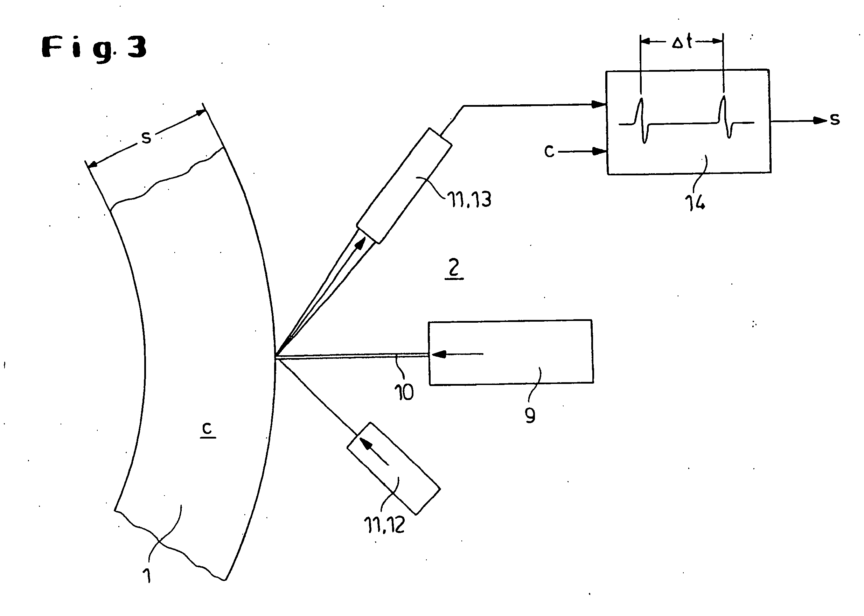

Zunächst sei auf Fig. 3 Bezug genommen, wo zu sehen ist, wie die Messung der Wanddicke s eines Hohlblocks 1 erfolgen kann.

Es kommt das Laser-Ultraschall-Wanddickenmessverfahren zum Einsatz, das auf das klassische Prinzip der Ultraschall-Laufzeitmessung abstellt. Aus der Zeit für das - zweimalige - Durchlaufen eines Ultraschallimpulses durch die Wand des Hohlblocks 1 ergibt sich bei bekannter Schallgeschwindigkeit c im Material des Hohlblocks die gesuchte Wanddicke s. Die Ankopplung des Ultraschalls bei der Heißwanddickenmessung mit Temperaturen im Bereich von ca. 1.000 °C erfordert sowohl auf der Anregungs- als auch auf der Detektionsseite berührungslose, optische Methoden, bei denen der Messkopf selber in einem thermisch sicheren Abstand zum Hohlblock 1 verbleiben kann.

Hochenergetische Licht-Pulse im Infrarotbereich werden in der Oberfläche des Hohlblocks 1 absorbiert. Sie werden von einem auf die Wand des Hohlblocks ausgerichteten, blitzlampen-gepumpten Nd:YAG-Laser 9 (Anregungslaser) erzeugt, der eine Wellenlänge von 1.064 nm bei einer Pulsdauer von weniger als 10 ns haben kann. Die vom Laser 9 auf die Oberfläche des Hohlblocks 1 aufgebrachte Energie (Ultraschallsignal 10), die von der Wand des Hohlblocks absorbiert wird, führt teilweise zur Verdampfung einer sehr dünnen Oberflächenschicht (Materialablation im nm-Bereich). Durch den Verdampfungs-Impuls entsteht - wegen der Impulserhaltung - im Hohlblock 1 ein Ultraschall-Impuls, der senkrecht zur Oberfläche des Hohlblocks in die dessen Wand läuft. Der Ultraschall-Impuls wird an der Innenoberfläche des Hohlblocks reflektiert, läuft zurück zur Außenoberfläche des Hohlblocks, wird erneut reflektiert usw., so dass in der Wand des Hohlblocks eine Ultraschall-Echofolge abnehmender Amplitude entsteht.

Der reflektierte Ultraschallimpuls erzeugt auf der Außenoberfläche des Hohlblocks 1 Schwingungen (im Sub-Miniaturbereich), die mittels eines zweiten Lasers 12 (Erfassungslaser) berührungslos unter Nutzung des Doppler-Effekts erfasst werden. Dieser Laser 12 kann ein CW-Laser sein (Continuous Wave Laser), namentlich ein in der Frequenz verdoppelter, diodengepumpter Nd:YAG-Laser, der mit einer Wellenlänge von 532 nm arbeitet und auf den Punkt der Anregung ausgerichtet ist. Die im Vergleich zur Lichtfrequenz niederfrequente Ultraschalischwingung führt zu einer Frequenz-Modulation des an der Materialoberfläche reflektierten Lichts.

Der reflektierte Lichtkegel, der jetzt träger" des Ultraschallsignales ist, wird über eine lichtstarke Sammellinse und einen Lichtwellenleiter einem optischer Analysator 13, d. h. einem Demodulator, zugeführt, wobei insbesondere ein konfokales Fabry-Perot-Interferometer zum Einsatz kommt; dessen Ausgangssignal beinhaltet bereits die Ultraschall-Echofolge. Die Mittel 11 zum Erfassen des Zeitintervalls t bestehen also aus dem Laser 12 und dem optischen Analysator 13.

Die weitere Verstärkung, Filterung und Signalauswertung der Ultraschall-Echofolge kann mit einer üblichen elektronischen Ultraschall-Auswerteeinheit 14 (Rechner) erfolgen. Das Ausgangssignal der Auswerteeinheit 14 ist die Wanddikke s des Hohlblocks 1, die aus dem Produkt von Schallgeschwindigkeit c und gemessenem Zeitintervall $\Delta t$ bestimmt wird, wie es schematisch in Fig. 3 angedeutet ist.

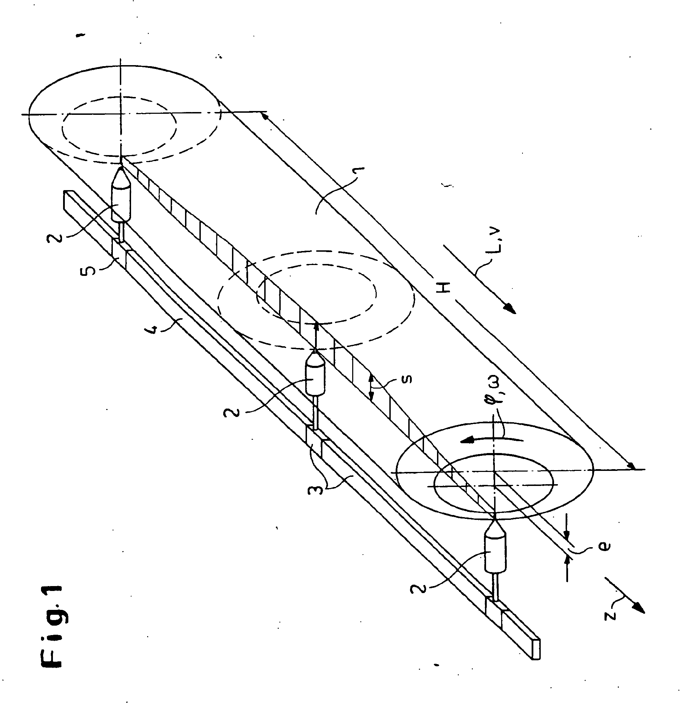

In Fig. 1 ist dargestellt, wie die Exzentrizität e des Hohlblocks 1 über dem Verlauf der Längenkoordinate z des Hohlblocks 1 ermittelt wird. Der Hohlblock 1 tritt aus einem - nicht dargestellten - Schrägwalzwerk rotierend aus, wobei er sich mit einer Drehgeschwindigkeit o dreht. Da der Hohlblock 1 in Richtung der Längsachse L mit einer Austrittsgeschwindigkeit v aus dem Schrägwalzwerk austritt, würde eine ortsfeste Messvorrichtung 2 die Wanddicke s des Hohlblocks entlang einer Bahn vermessen, die sich spiralförmig in Richtung der Längenkoordinate z des Hohlblocks 1 erstreckt.

Aufgrund des Walzprozesses im Schrägwalzwerk verläuft - wie es in Fig. 1 angedeutet ist - die Exzentrizität e wendelförmig nach Art eines Korkenziehers in Richtung der Längenkoordinate z des Hohlblocks 1. Schematisch dargestellt sind drei Schnitte, anhand deren zu sehen ist, dass sich die Wanddicke s mit der Periode der Ganghöhe bzw. Schlaglänge H periodisch wiederholt.

Problematisch ist, dass die Haupt-Exzentrizität im Hohlblock 1, also die Haupt-Innenwendel, eine Periode, nämlich die Schlaglänge bzw. Ganghöhe H, aufweist, die identisch ist mit der Periode der Mess-Spirale, die sich bei ortsfester Messvorrichtung 2 ergibt.

Damit auf den räumlichen Verlauf der Exzentrizität e entlang der Längenkoordinate z des Hohlblocks 1 geschlossen werden kann, wird erfindungsgemäß wie folgt vorgegangen:

Die Messvorrichtung 2 ist auf einem Bewegungselement 3 angeordnet, das die Messvorrichtung 2 relativ zum - nicht dargestellten - Schrägwalzwerk bewegen kann. Gemäß Fig. 1 besteht das Bewegungselement 3 aus einer Linearführung 4 und einem Schlitten 5, der auf der Linearführung 4 bewegt werden kann. Die Messvorrichtung 2 ist auf dem Schlitten 5 angeordnet. Mittels eines nicht dargestellten Motors kann also die Messvorrichtung 2, die die Wanddicke s des Hohlblocks ermitteln kann, in Richtung der Längenkoordinate z des Hohlblocks 1 - parallel zur Ausstoßrichtung des Hohlblocks 1 aus dem Schrägwalzwerk - verfahren werden.

Vorgesehen ist, dass sich die Messvorrichtung 2 zyklisch wiederholend relativ zum Schrägwalzwerk bewegt. Sie fährt also zunächst mit einer Geschwindigkeit v parallel zum Hohlblock 1 auf der Linearführung 4 bzw. auf dem Schlitten 5 und misst eine Anzahl Wanddicken s, die in einem Speicher hinterlegt werden. In Fig. 1 bedeutet dies, dass sich die Messvorrichtung 2 zunächst in der hintersten der drei skizzierten Positionen befindet und dann in Richtung der Längenkoordinate z mit der Austrittsgeschwindigkeit v "parallel" zum Austritt des Hohlblocks 1 aus dem Schrägwalzwerk verschoben wird. Zu sehen ist neben der Ausgangssituation (hinterste Position) eine mittlere Position zwischen den beiden Endpositionen der Messvorrichtung 2 und die vorderste Position der Messvorrichtung 2, nach deren Erreichen die Vorrichtung 2 wieder in die hinterste Position zurückverfahren wird, woraufhin sich eine Wiederholung des Messvorgangs in der erläuterten Weise anschließt.

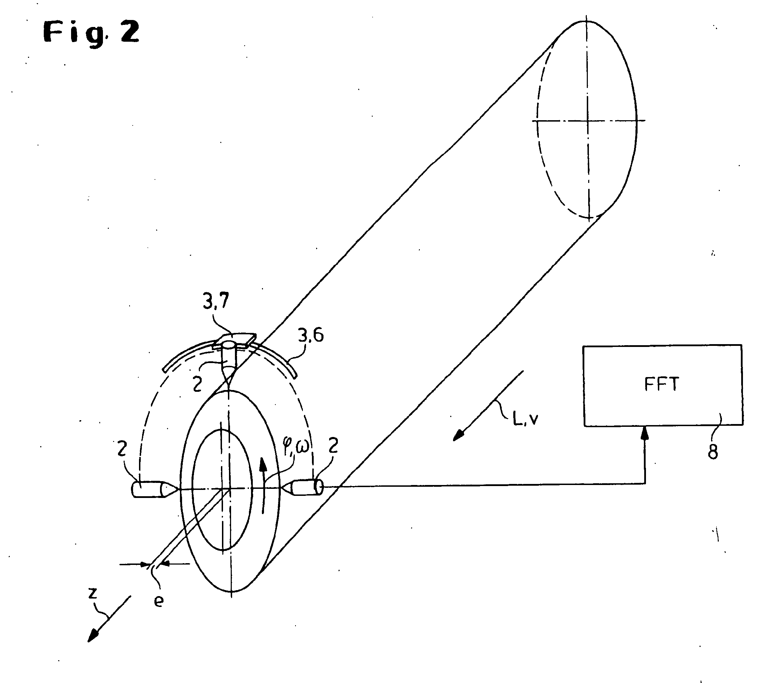

Alternativ hierzu kann - wie es in Fig. 2 dargestellt ist - vorgesehen werden, dass statt einer Verschiebung der Messvorrichtung 2 in Richtung der Längenkoordinate z auch deren Verschwenken in Umfangsrichtung des Hohlblocks 1 stattfindet. Hierzu ist gleichermaßen ein Bewegungselement 3 angeordnet, das eine Führung 6 aufweist, die sich kreisförmig um den Hohlblock 1 herum erstreckt (nur ausschnittsweise dargestellt). Auf der Führung 6 läuft ein Schlitten 7, der die Messvorrichtung 2 in Umfangsrichtung ($\phi$) um den Hohlblock 1 herum verfahren kann. Dargestellt ist in Fig. 2 eine Ausgangsposition (3-Uhr-Stellung), eine mittlere Position (12-Uhr-Stellung) und eine Endposition (9-Uhr-Stellung).

Ist die Endposition erreicht (9-Uhr-Stellung), schwenkt die Messvorrichtung 2 in die Ausgangsposition (3-Uhr-Stellung) zurück.

Zur Ermittlung der Exzentrizität über dem Verlauf der Längenkoordinate z des Hohlblocks 1 wird wie folgt vorgegangen:

Die gemessenen Wanddicken s werden - wie bereits gesagt - während eines Messzyklus gespeichert. Sie werden in einem Rechnermittel 8 hinterlegt (s. Fig. 2), in dem die Messdaten mathematisch aufbereitet werden. Hierbei werden die Messwerte einer Fourier-Analyse unterzogen, die die Wanddicke s über der Längenkoordinate z und über dem Drehwinkel $\phi$ (Umfangswinkel des Hohlblocks 1) als Summe einzelner harmonischer Schwingungen mit unterschiedlicher Amplitude und unterschiedlichen Anfangslagewinkeln darstellt, s. die oben angegebene Formel. Schematisch ist im Rechnermittel 8 in Fig. 2 die "Fast Fourier Transformation" FFT vermerkt, die auf eine bevorzugte, der Fourier-Transformation zugrunde liegende mathematisch Vorgehensweise hinweist. Details hierzu finden sich beispielsweise in "Hütte - Die Grundlagen der Ingenieurwissenschaften", 29. Auflage, S. B 34 ff. Frequenzverschiebungen durch die zusätzliche Relativbewegung des Messkopfs werden im Rechnermittel 8 berücksichtigt.

In der obengenannten Näherung wird die Wanddicke s bei "idealer Exzentrizität" durch die von der Längenkoordinate z des Hohlblocks 1 abhängige Exzenteramplitude $s_1(z)$ beschrieben. Die zugehörige Umfangsverteilung ist durch die Cosinus-Funktion wiedergegeben und der Umlaufcharakter einschließlich der Umlaufgeschwindigkeit ist mit dem aktuellen Exzenterlagenwinkel $\delta(z)$ hinreichend formuliert. Als mathematische Näherung wird der Wanddickenverlauf mit einem Gesamt-Mittelwandwert mit überlagerten "Schlagschwingungen" angesetzt. Für einen festen Winkel $\phi$ erhält man eine herkömmliche Fourier-Reihe in "z". Dabei sind die Anfangslagewinkel $\xi_{i,1}$ der Längsschwingungen abhängig von der Hohlblocklage während der Messung (Anfangswinkel). Variiert man zu jeder Längs-Koordinate der Näherung entsprechend den Winkel $\phi$, so ist der gesamte Verlauf der Exzentrizität im Hohlblock 1 beschrieben.

Es kann damit wie folgt zusammengefasst werden: Um die Haupt-Exzentrizität, d. h. diejenige, die durch die Haupt-Innenwendel in einem Hohlblock definiert ist, darzustellen, wird die Messvorrichtung während der Messung entweder in Längsrichtung hin und der verfahren oder um den Hohlblock herum verschwenkt, und zwar in beiden Fällen mit Bewegungsamplituden, die sicherstellen, dass mit der Messvorrichtung die Ganghöhe der Haupt-Innenwendel vollständig überstrichen wird.

Führt man auf einen gemessenen Wanddickensatz, bei dem die Verfahramplitude in Längsrichtung z. B. gleich der halben Ganghöhe gewählt wurde, eine Fourier-Analyse durch, so findet man die Amplitude der Haupt-Umformspirale bei der Verfahrfrequenz der Messvorrichtung. Bei einem vollen Fahrzyklus überstreicht man in diesem Falle die komplette Ganghöhe.

Aus Sicht der Daten- bzw. Frequenzanalyse kann man sich diesen Sachverhalt so vorstellen: Dadurch, dass direkt im Auslauf des Schrägwalzwerks mit gleicher Drehzahl bzw. mit gleichem Vorschub die Wanddicke abgetastet (abgescannt) wird, ergibt sich hinsichtlich der im Hohlblock eingewalzte Exzenterschwingfrequenz eine Frequenzverschiebung nach Null. Die Rotation bei der Messung wirkt im Frequenzbereich wie eine Verschiebung. Das Gleiche gilt für die zyklische Messvorrichtungs-Verfahrbewegung.

Würde man einen in einer Presse hergestellten Hohlblock spiralförmig abtastend in der Wanddicke vermessen, so würde man dessen Exzentrizität, die quasi "feststeht" und keinen umlaufenden Charakter hat (Frequenz gleich Null und Schlaghöhe gleich unendlich), exakt bei der Abtast-Drehfrequenz finden.

Die Fourier-Analyse spiralförmig abgetasteter Messdaten liefert folglich als Ergebnis die Differenz der beiden Frequenzen, also die relative Frequenz zwischen der "Walzspirale" und der "Abtastspirale". Im Auslauf des Schrägwalzwerks ist diese folglich Null. Die Frequenz Null repräsentiert im Frequenzbereich dabei den Mittelwert, der abhängig von der relativen Anfangslage (Anfangs-Phasenwinkel) der Haupt-Innenwendel durch die Innenwendel natürlich verfälscht wird. Misst man z. B. genau im "Tal" der Exzenterspirale, so wird der Mittelwert nach unten verfälscht, misst man dagegen quasi "auf dem Berg", so erfolgt die Verfälschung nach oben.

Die Anfangslage variiert dabei zufällig von Hohlblock zu Hohlblock durch die unterschiedlichen Einzugsbedingungen und -punkte.

Die zusätzliche erfindungsgemäße Messbewegung sorgt nun dafür, dass die Relativfrequenz ungleich Null und damit wieder in einen sichtbaren Bereich transformiert wird, wodurch gleichzeitig die Mittelwertverfälschung durch die Umformspirale rückgängig gemacht wird.

Die beschriebene Auswertung der gemessenen Werte für die Wanddicke läuft damit darauf hinaus, dass an sich bekannte Interpretations- bzw. Auswertemethoden herangezogen werden, wie sie in der Nachrichtentechnik Verwendung finden, wie die der Frequenzverschiebung und Modulation.

Zu erwähnen ist noch, dass die Messung der Wanddicke mittels des erläuterten Ultraschall-Messverfahrens auch bei sich im Hohlblock befindlicher Dornstange erfolgreich erfolgen kann.

Es wurde bereits erwähnt, dass mehr als eine Wanddickenmessvorrichtung zum Einsatz kommen kann. Dann wird das System nicht nur einkanalig, sondern mehrkanalig realisiert. Es können namentlich mehrere Wanddickenmessvorrichtungen äquidistant über den Umfang des Hohlblocks angeordnet werden.

Für eine hinreichend genaue Abbildung der sich räumlich erstreckenden Exzentrizität als Funktion der Längenkoordinate z und des Drehwinkels $\phi$ ist es auch wichtig, dass eine genügend hohe Abtastfrequenz eingehalten wird. Hier geht es namentlich darum, minimale Abtastfrequenzen gemäß dem Shannonschen Abtasttheorem einzuhalten. Details hierzu finden sich in "Hütte - Die Grundlagen der Ingenieurwissenschaften", 29. Auflage, S. H 68 f. So kann beispielsweise bei 50 Hz-Abtastrate die Schlagfrequenz einer Vorschubspirale im Hohlblock mit 40 mm Ganghöhe noch bestimmt werden, wenn ein Hohlblock mit weniger als 1 m/s ohne Rotation am Messkopf vorbei bewegt wird.

Es sei noch folgendes angemerkt: In obigen Ausführungen wurde speziell darauf eingegangen, dass die zu vermessende "Wendel" im Hohlblock als wendelartiger

Verlauf der inneren Oberfläche des Hohlblocks ausgebildet ist. Genauso kann das beschriebene Verfahren und die zugehörige Vorrichtung auch zum Einsatz kommen, wenn sich die "Wendel" auf der äußeren Oberfläche des Hohlblocks befindet.

**<u>Bezugzeichenliste:</u>**

| 1 | Hohlblock |
|---|---|
| 2 | Messvorrichtung |
| 3 | Bewegungselement |
| 4 | Linearführung |
| 5 | Schlitten |
| 6 | Führung |
| 7 | Schlitten |
| 8 | Rechnermittel |
| 9 | Mittel zum Einleiten des Ultraschallsignals (Anregungslaser) |
| 10 | Ultraschallsignal |
| 11 | Mittel zum Messen des Zeitintervalls |
| 12 | Laser |
| 13 | optischer Analysator (Fabry-Perot-Interferometer) |
| 14 | Rechner |

| $e$ | Exzentrizität |
|---|---|
| $L$ | Längsachse |
| $s$ | Wanddicke |
| $H$ | Ganghöhe (Schlaglänge) |
| $v$ | Austrittsgeschwindigkeit |
| $o$ | Drehgeschwindigkeit |

| $z$ | Längenkoordinate des Hohlblocks |
|---|---|
| $\phi$ | Drehwinkel (Umfangsrichtung des Hohlblocks) |
| $S_0$ | mittlere Wanddicke des Hohlblockes |
| $S_1$ | überlagerte Wanddickenamplitude |
| $\delta$ | Lagewinkel |
| $n$ | Anzahl der Fourier-Reihenelemente |
| $S_0^*$ | Fourier-Koeffizient für die Wanddicke |
| $S_{i,1}$ | Fourier-Koeffizient für die Wanddicke (i = 1, ..., n) |
| $p_i$ | Fourier-Koeffizient für die Ganghöhe (i = 1, ..., n) |
| $\xi_{i,1}$ | Fourier-Koeffizient für den Anfangslagewinkel (i = 1, ..., n) |

| $\Delta t$ | Zeitintervall |
|---|---|
| $c$ | Schallgeschwindigkeit |

| FFT | Fast Fourier Transformation |
|---|---|

**Patentansprüche**

1. Verfahren zur Bestimmung der Exzentrizität (e) eines Hohlblocks (1) vor, bei oder nach dessen Passieren eines Walzwerkes, wobei sich der Hohlblock (1) in Richtung seiner Längsachse (L) translatorisch bewegt, mittels mindestens einer Messvorrichtung (2), die die Wanddicke (s) des Hohlblocks (1) an einer Längen- und Umfangsposition des Hohlblocks (1) ermittelt, wobei die Messvorrichtung (2) während der Messung in Richtung der Längsachse (L) und/oder in Umfangsrichtung des Hohlblocks (1) bewegt wird und wobei während der Bewegung eine Anzahl Wanddickenmessungen vorgenommen werden,
**dadurch gekennzeichnet,**
**dass** der Verlauf der Exzentrizität (e) des Hohlblocks (1) annähernd abgebildet wird als Verlauf der Wanddicke (s) als Funktion der sich in Richtung der Längsachse (L) des Hohlblocks (1) erstreckenden Längenkoordinate (z) und des Drehwinkels ($\phi$) um die Längenkoordinate (z) gemäß der Beziehung

$$s(\phi, z) = s_0(z) + s_1(z) \cos(\phi + \delta(z)),$$

wobei $s_0$ die mittlere Wanddicke des Hohlblockes (1), $s_1$ die der mittleren Wanddicke $s_0$ überlagerte Wanddickenamplitude und $\delta$ der von der Längenkoordinate (z) abhängige Lagewinkel ist,
wobei die Messvorrichtung (2) die beim Passieren des Hohlblocks (1) gemessenen Wanddicken einem Rechnermittel (8) zuleitet, das diese einer Fourier-Transformation unterzieht, um für den funktionalen Verlauf der Wanddicke (s) als Funktion der Längenkoordinate (z) und des Drehwinkels ($\phi$) eine Näherung der Form

$$s(\phi,z) \approx s_0^* + \sum s_{i,1} \cos(\phi + 2\pi/p_i\, z + \xi_{i,1})$$

zu ermitteln, wobei $s_0^*$ und $s_{i,1}$ die ermittelten Fourier-Koeffizienten für die Wanddicke des Hohlblocks (1) bei Summation (i) über die Anzahl (n) der Fourier-Reihenelemente und $p_i$ und $\xi_{i,1}$ die Fourier-Koeffizienten für die Ganghöhen bzw. für die Anfangslagewinkel bei Summation (i) über die Anzahl (n) der Fourier-Reihenelemente sind.

2. Verfahren nach Anspruch 1,
**dadurch gekennzeichnet,**
**dass** die Exzentrizität (e) des Hohlblocks (1) im Bereich des Auslaufs eines Walzwerkes, insbesondere eines Schrägwalzwerkes, bestimmt wird.

3. Verfahren nach Anspruch 1 oder 2,
**dadurch gekennzeichnet,**
**dass** der Hohlblock (1) vor, bei oder nach seinem Passieren des Walzwerkes, insbesondere bei seinem Auslauf aus dem Walzwerk, um seine Längsachse (L) rotiert.

4. Verfahren nach einem der Ansprüche 1 bis 3,
**dadurch gekennzeichnet,**
**dass** die Bewegung der Messvorrichtung (2) sich zyklisch wiederholend ausgeführt wird.

5. Verfahren nach einem der Ansprüche 1 bis 4,
**dadurch gekennzeichnet,**
**dass** die Messvorrichtung (2) während der Messung in Richtung der Längsachse (L) mit der Geschwindigkeit (v) des Hohlblocks (1), insbesondere mit der Austrittsgeschwindigkeit des Hohlblocks (1) aus dem Walzwerk, bewegt wird.

6. Verfahren nach einem der Ansprüche 1 bis 5,
**dadurch gekennzeichnet,**
**dass** bei ausschließlicher Bewegung der Messvorrichtung (2) in Richtung der Längsachse (L) diese eine Hubbewegung ausführt, die mindestens der halben Ganghöhe (H), vorzugsweise mindestens einer ganzen Ganghöhe (H), der Exzentrizität (e) im Hohlblock (1) entspricht.

7. Verfahren nach einem der Ansprüche 1 bis 4,
**dadurch gekennzeichnet,**
**dass** bei ausschließlicher Bewegung der Messvorrichtung (2) in Umfangsrichtung des Hohlblocks (1) diese eine Schwenkbewegung ausführt, die mindestens 180° beträgt.

8. Vorrichtung zur Bestimmung der Exzentrizität (e) eines Hohlblocks (1) vor, bei oder nach dessen Passieren eines Walzwerkes, insbesondere zur Durchführung des Verfahrens nach einem der Ansprüche 1 bis 7, wobei sich der Hohlblock (1) in Richtung seiner Längsachse (L) translatorisch bewegt, und die Vorrichtung mindestens eine Messvorrichtung (2) zur Ermithtlung der Wanddicke (s) des Hohlblocks (1) an einer Längen- und Umfangsposition des Hohlblocks (1) aufweist, wobei die Messvorrichtung (2) mit einem Bewegungselement (3) in Verbindung steht, das die Messvorrichtung (2) während der Messung in Richtung der Längsachse (L) und/oder in Umfangsrichtung des Hohlblocks (1) beaufschlagt,
**gekennzeichnet durch**
Rechnermittel (8), zur Durchführung einer Fourier-Transformation zur näherungsweisen Ermittlung des Verlaufs der Exzentrizität (e) des Hohlblocks, dazu eingerichtet um für den funktionalen Verlauf der Wanddicke (s) als Funktion der Längenkoordinate (z) und des Drehwinkels ($\phi$) eine Näherung der Form

$$s(\phi,z) \approx s_0{}^* + \sum s_{i,1} \cos(\phi + 2\pi/p_i\ z + \xi_{i,1})$$

zu ermitteln, wobei $s_0{}^*$ und $s_{i,1}$ die ermittelten Fourier-Koeffizienten für die Wanddicke des Hohlblocks (1) bei Summation (i) über die Anzahl (n) der Fourier-Reihenelemente und $p_i$ und $\xi_{i,1}$ die Fourier-Koeffizienten für die Ganghöhen bzw. für die Anfangslagewinkel bei Summation (i) über die Anzahl (n) der Fourier-Reihenelemente sind.

9. Vorrichtung nach Anspruch 8,
**dadurch gekennzeichnet,**
**dass** die Messvorrichtung (2) im Bereich des Auslaufs eines Walzwerkes, insbesondere eines Schrägwalzwerkes, angeordnet ist.

10. Vorrichtung nach Anspruch 8 oder 9,
**dadurch gekennzeichnet,**
**dass** das Bewegungselement (3) eine in Richtung der Längsachse (L) des Hohlblocks (1) verlaufende Linearführung (4) und einen auf dieser verfahrbaren Schlitten (5) aufweist.

11. Vorrichtung nach Anspruch 8 oder 9,
**dadurch gekennzeichnet,**
**dass** das Bewegungselement (3) eine in Umfangsrichtung des Hohlblocks (1) verlaufende Führung (6) und einen auf dieser verfahrbaren Schlitten (7) aufweist.

12. Vorrichtung nach einem der Ansprüche 8 bis 11,
**dadurch gekennzeichnet,**
**dass** die mindestens eine Messvorrichtung (2) Mittel (9) zum Einleiten eines Ultraschallsignals (10) in die Oberfläche des Hohlblocks (1) aufweist.

13. Vorrichtung nach Anspruch 12, **dadurch gekennzeichnet,**
**dass** das Mittel (9) ein Laser ist, insbesondere ein blitzlampen-gepumpter Nd:YAG-Laser.

14. Vorrichtung nach einem der Ansprüche 8 bis 13,
**dadurch gekennzeichnet,**
**dass** die mindestens eine Messvorrichtung (2) Mittel (11) zum Messen eines Zeitintervalls ($\Delta$t) zwischen zwei Echo-Ultraschallsignalen aufweist, die der Hohlblock (1) infolge der Einleitung des Ultraschallsignals (10) emittiert.

15. Vorrichtung nach Anspruch 14,
**dadurch gekennzeichnet, dass** das Mittel (11) einen Laser (12), insbesondere einen dioden-gepumpten Nd:YAG-Laser, und einen optischen Analysator (13), insbesondere ein Fabry-Perot-Interferometer, aufweist.

**Claims**

1. A method for determining the eccentricity (e) of a hollow block (1) before, during or after its passage through a rolling mill, wherein the hollow block (1) is moved in a translatory fashion in the direction of its longitudinal axis (L) by means of at least one measuring device (2) that determines the wall thickness (s) of the hollow block (1) at a longitudinal and circumferential position of the hollow block (1), wherein the measuring device (2) is moved in the direction of the longitudinal axis (L) and/or in the circumferential direction of the hollow block (1) during the measurement, and wherein a number of wall thickness measurements are carried out during this movement,
   **characterized in**
   **that** the progression of the eccentricity (e) of the hollow block (1) is approximately mapped in the form of the progression of the wall thickness (s) as a function of the longitudinal coordinate (z) extending in the direction of the longitudinal axis (L) of the hollow block (1) and the rotational angle ($\phi$ about the longitudinal coordinate (z) in accordance with the correlation

$$s(\phi, z) = s_0(z) + s_1(z) \cos(\phi + \delta(z)),$$

   wherein $s_0$ is the average wall thickness of the hollow block (1), $s_1$ if the wall thickness amplitude superimposed on the average wall thickness $s_0$ and $\delta$ is the orientation angle that is dependent on the longitudinal coordinate (z), wherein the measuring device (2) feeds the wall thicknesses measured during the passage of the hollow block (1) to a computer means (8) that subjects the wall thicknesses to a Fourier transformation in order to determine an approximation in the form of

$$s(\phi,z) \approx s_0^* + \sum s_{i,1} \cos(\phi + 2\pi/p_i \, z + \xi_{i,1})$$

   for the functional progression of the wall thickness (s) as a function of the longitudinal coordinate (z) and of the rotational angle ($\Phi$), wherein $s_0^*$ and $s_{i,1}$ are the determined Fourier coefficients for the wall thickness of the hollow block (1) in a summation (i) over the number (n) of Fourier row elements and $p_i$ and $\xi_{i,1}$ are the Fourier coefficients for the pitch or the initial orientation angle in a summation (i) over the number (n) of Fourier row elements.

2. The method according to Claim 1,
   **characterized in**
   **that** the eccentricity (e) of the hollow block (1) is determined in the region of the outlet of a rolling mill, particularly a crossrolling mill.

3. The method according to Claim 1 or 2,
   **characterized in**
   **that** the hollow block (1) rotates about its longitudinal axis (L) before, during or after its passage through the rolling mill, particularly during its output from the rolling mill.

4. The method according to one of Claims 1 to 3,
   **characterized in**
   **that** the movement of the measuring device (2) is carried out in a cyclically repeating fashion.

5. The method according to one of Claims 1 to 4,
   **characterized in**
   **that** the measuring device (2) is moved in the direction of the longitudinal axis (L) with the speed (v) of the hollow block (1), particularly with the output speed of the hollow block (1) from the rolling mill, during the measurement.

6. The method according to one of Claims 1 to 5,
   **characterized in**

**that** the measuring device (2) carries out a lifting movement that corresponds to at least half the pitch (H), preferably at least one entire pitch (H), of the eccentricity (e) in the hollow block (1) if the measuring device is moved in the direction of the longitudinal axis (L) only.

7. The method according to one of Claims 1 to 4,
**characterized in**
**that** the measuring device (2) carries out a pivoting movement that amounts to at least 180° if the measuring device is moved in the direction of the circumferential direction of the hollow block (1) only.

8. A device for determining the eccentricity (e) of a hollow block (1) before, during or after its passage through a rolling mill, particularly for carrying out the method according to one of Claims 1 to 7, wherein the hollow block (1) moves in a translatory fashion in the direction of its longitudinal axis (L) and the device features at least one measuring device (2) for determining the wall thickness (s) of the hollow block (1) at a longitudinal and circumferential position of the hollow block (1), wherein the measuring device (2) is connected to a motive element (3) that acts upon the measuring device (2) in the direction of the longitudinal axis (L) and/or in the circumferential direction of the hollow block (1) during the measurement,
**characterized by**
computing means (8) for carrying out a Fourier transformation in order to approximately determine the progression of the eccentricity (e) of the hollow block, wherein said computing means are designed for determining an approximation in the form of

$$s(\phi,z) \approx s_0^* + \sum s_{i,1} \cos(\phi + 2\pi/p_i \; z + \xi_{i,1})$$

for the functional progression of the wall thickness (s) as a function of the longitudinal coordinate (z) and of the rotational angle ($\Phi$), wherein $s_0^*$ and $s_{i,1}$ are the determined Fourier coefficients for the wall thickness of the hollow block (1) in a summation (i) over the number (n) of Fourier row elements and $p_i$ and $\xi_{i,1}$ are the Fourier coefficients for the pitch or the initial orientation angle in a summation (i) over the number (n) of Fourier row elements.

9. The device according to Claim 8,
**characterized in**
**that** the measuring device (2) is arranged in the region of the outlet of a rolling mill, particularly a crossrolling mill.

10. The device according to Claim 8 or 9,
**characterized in**
**that** the motive element (3) features a linear guide (4) that extends in the direction of the longitudinal axis (L) of the hollow block (1) and a slide (5) that can be displaced on this linear guide.

11. The device according to Claim 8 or 9,
**characterized in**
**that** the motive element (3) features a guide (6) that extends in the circumferential direction of the hollow block (1) and a slide (7) that can be displaced on this guide.

12. The device according to one of Claims 8 to 11,
**characterized in**
**that** the at least one measuring device (2) features means (9) for introducing an ultrasonic signal (10) into the surface of the hollow block (1).

13. The device according to Claim 12,
**characterized in**
**that** the means (9) consists of a laser, particularly a flashlamp-pumped Nd:YAG laser.

14. The device according to one of Claims 8 to 13,
**characterized in**
**that** the at least one measuring device (2) features means (11) for measuring a time interval ($\Delta t$) between two ultrasonic echo signals that the hollow block (1) emits due to the introduction of the ultrasonic signal (10).

**15.** The device according to Claim 14,
**characterized in**
**that** the means (11) features a laser (12), particularly a diode-pumped Nd:YAG laser, and an optical analyzer (13), particularly a Fabry-Perot interferometer.

**Revendications**

**1.** Procédé de détermination de l'excentricité (e) d'un lingot creux (1) avant, pendant et après son passage dans un laminoir, le lingot creux (1) se déplaçant en translation en direction de son axe longitudinal (L), au moyen d'au moins un dispositif de mesure (2) qui détermine l'épaisseur de paroi (s) du lingot creux (1) à une position longitudinale et circonférentielle du lingot creux (1), le dispositif de mesure (2) se déplaçant pendant la mesure en direction de l'axe longitudinal (L) et/ou dans le sens circonférentiel du lingot creux (1) et un certain nombre de mesures d'épaisseur de paroi étant effectuées pendant le mouvement,
**caractérisé en ce que**
l'extension de l'excentricité (e) du lingot creux (1) est représentée approximativement en tant qu'extension de l'épaisseur de paroi (s) en tant que fonction de la coordonnée de longueur (z) s'étendant en direction de l'axe longitudinal (L) du lingot creux (1) et de l'angle de rotation ($\phi$) autour de la coordonnée de longueur (z) suivant la relation

$$s(\phi, z) = s_0(z) + s_1(z) \cos(\phi + \delta(z)),$$

$s_0$ étant l'épaisseur de paroi moyenne du lingot creux (1), $s_1$ celle de l'amplitude de l'épaisseur de paroi superposée à l'épaisseur de paroi moyenne $s_0$ et $\delta$ celle de l'angle de positionnement fonction de la coordonnée de longueur (z), le dispositif de mesure (2) communiquant les épaisseurs de paroi mesurées lors du passage du lingot creux (1) à un système de calcul (8) qui les soumet à une transformation Fourier, afin de déterminer pour l'extension fonctionnelle de l'épaisseur de paroi (s), en tant que fonction de la coordonnée de longueur (z) et de l'angle de rotation ($\phi$), une approximation de forme

$$s(\phi, z) \approx s_0^* + \sum s_{i,1} \cos(\phi + 2 \prod/p_i \, z + \xi_{i,1}),$$

$s_0^*$ et $s_{i,1}$ étant les coefficients Fourier déterminés pour l'épaisseur de paroi du lingot creux (1) avec addition (i) au nombre (n) d'éléments de série Fourier et $p_i$ et $\xi_{i,1}$) les coefficients Fourier pour les pas ou pour les angles de positionnement initial avec addition (i) au nombre (n) d'éléments de série Fourier.

**2.** Procédé selon la revendication 1,
**caractérisé en ce que**
l'excentricité (e) du lingot creux (1) est déterminée dans la zone de sortie d'un laminoir, en particulier d'un laminoir à cylindres obliques.

**3.** Procédé selon la revendication 1 ou 2,
**caractérisé en ce que**
le lingot creux (1) tourne autour de son axe longitudinal (L) avant, pendant ou après son passage dans un laminoir, en particulier lors de sa sortie du laminoir.

**4.** Procédé selon une des revendications 1 à 3,
**caractérisé en ce que**
le mouvement du dispositif de mesure (2) s'exécute en se répétant cycliquement.

**5.** Procédé selon une des revendications 1 à 4,
**caractérisé en ce que**
le dispositif de mesure (2), pendant la mesure en direction de l'axe longitudinal (L), se déplace à la vitesse (v) du lingot creux (1), en particulier à la vitesse de sortie du lingot creux (1) du laminoir.

**6.** Procédé selon une des revendications 1 à 5,
**caractérisé en ce que**,
en cas de mouvement exclusif du dispositif de mesure (2) en direction de l'axe longitudinal (L), celui-ci exécute un mouvement d'élévation, qui équivaut au moins à la moitié du pas (H), de préférence à l'intégralité du pas (H), de l'excentricité (e) dans le lingot creux (1).

**7.** Procédé selon une des revendications 1 à 4,
**caractérisé en ce que**,
en cas de mouvement exclusif du dispositif de mesure (2) dans le sens circonférentiel du lingot creux (1), celui-ci exécute un mouvement pivotant qui couvre au moins 180°.

**8.** Dispositif de détermination de l'excentricité (e) d'un lingot creux (1) avant, pendant et après son passage dans un laminoir, en particulier pour la réalisation du procédé selon une des revendications 1 à 7, le lingot creux (1) se déplaçant en translation en direction de son axe longitudinal (L) et le dispositif présentant au moins un dispositif de mesure (2) pour déterminer l'épaisseur de paroi (s) du lingot creux (1) à une position longitudinale et circonférentielle du lingot creux (1), le dispositif de mesure (2) étant en liaison avec un élément de déplacement (3) qui pousse le dispositif de mesure (2) pendant la mesure en direction de l'axe longitudinal (L) et/ou dans le sens circonférentiel du lingot creux
**caractérisé par**
un système de calcul (8) pour réaliser une transformation Fourier en vue de la détermination approximative de l'extension de l'excentricité (e) du lingot creux (1) et agencé dans le but de déterminer pour l'extension fonctionnelle de l'épaisseur de paroi (s), en tant que fonction de la coordonnée de longueur (z) et de l'angle de rotation ($\phi$), une approximation de forme

$$s(\phi, z) \approx s_0{}^* + \textstyle\sum s_{i,1} \cos(\phi + 2 \prod/p_i\, z + \xi_{i,1}),$$

$s_0{}^*$ et $s_{i,1}$ étant les coefficients Fourier déterminés pour l'épaisseur de paroi du lingot creux (1) avec addition (i) au nombre (n) d'éléments de série Fourier et $p_i$ et $\xi_{i,1}$) les coefficients Fourier pour les pas ou pour les angles de positionnement initial avec addition (i) au nombre (n) d'éléments de série Fourier.

**9.** Procédé selon la revendication 8,
**caractérisé en ce que**
le dispositif de mesure (2) est disposé au niveau de la sortie d'un laminoir, en particulier d'un laminoir à cylindres obliques.

**10.** Procédé selon la revendication 8 ou 9,
**caractérisé en ce que**
l'élément de déplacement (3) présente un guide linéaire (4) s'étendant en direction de l'axe longitudinal (L) du lingot creux (4) et un chariot (5) pouvant être déplacé sur celui-ci.

**11.** Procédé selon la revendication 8 ou 9,
**caractérisé en ce que**
l'élément de déplacement (3) présente un guide linéaire (4) s'étendant dans le sens circonférentiel du lingot creux (4) et un chariot (5) pouvant être déplacé sur celui-ci.

**12.** Procédé selon une des revendications 8 à 11,
**caractérisé en ce que**
l'au moins un dispositif de mesure (2) présente un moyen (9) permettant de conduire le signal échographique (10) dans la surface du lingot creux (1).

**13.** Procédé selon la revendication 12,
**caractérisé en ce que**
ce moyen (9) est un laser, en particulier un laser Nd : YAG pompé par lampe flash.

**14.** Procédé selon une des revendications 8 à 13,

**caractérisé en ce que**
l'au moins un dispositif de mesure (2) présente un moyen (9) permettant de mesurer un laps de temps ($\Delta$t) entre deux signaux échographiques que le lingot creux (1) émet suite à la conduction du signal échographique.

15. Procédé selon la revendication 14,
    **caractérisé en ce que**
    ce moyen (9) présente un laser, en particulier un laser Nd : YAG pompé par diode, et un analyseur optique (13), en particulier un interféromètre Fabry-Perot.

# Fig.1

5

2

4

2

3

2

s

φ,ω

H

L,v

z

e

EP 1 369 664 B1

Fig. 2

Fig.3

**IN DER BESCHREIBUNG AUFGEFÜHRTE DOKUMENTE**

**In der Beschreibung aufgeführte Patentdokumente**

- EP 0940193 A2
- EP 1102033 A

**In der Beschreibung aufgeführte Nicht-Patentliteratur**

- Hütte - Die Grundlagen der Ingenieurwissenschaften. B 34 ff